Europäisches Patentamt

European Patent Office

Office européen des brevets

(11) Numéro de publication: **0 233 795**
**A1**

# DEMANDE DE BREVET EUROPEEN

(21) Numéro de dépôt: **87400052.4**

(22) Date de dépôt: **13.01.87**

(51) Int. Cl.⁴: **A 22 B 7/00**

(30) Priorité: **13.01.86 FR 8600383**

(43) Date de publication de la demande:
**26.08.87 Bulletin 87/35**

(84) Etats contractants désignés:
**AT BE CH DE ES FR GB GR IT LI LU NL SE**

(71) Demandeur: **BOCA-OUEST**
**1 Place des Prairies**
**F-49300 Cholet (FR)**

(72) Inventeur: **Soullard, Marcel**
**l'Oseraie Route de Trémentines**
**F-49300 Cholet (FR)**

**Brochard, Victor**
**79 Rue de l'Yser**
**F-49300 Cholet (FR)**

(74) Mandataire: **Casalonga, Axel et al**
**BUREAU D.A. CASALONGA - JOSSE Morassistrasse 8**
**D-8000 Munich 5 (DE)**

(54) **Procédé et installation de traitement de viande de bovins ou autres quadrupèdes.**

(57) L'installation de traitement semi-automatique de quartiers de viande de bovins ou autres quadrupèdes comprend un agencement de rail aérien (1) de niveau constant formant une boucle fermée, une pluralité de potences d'accrochage (6) suspendues à intervalles réguliers le long du rail aérien (1), des moyens d'entraînement en continu de l'ensemble des potences le long de ladite boucle fermée du rail aérien (1), une pluralité de postes de traitement fixes (8) disposés le long d'au moins une portion de la boucle fermée et à l'extérieur de celle-ci, chaque poste (8) comprenant une plate-forme (9) équipée de moyens de déplacement vertical automatique à commande manuelle, un agencement de tapis transporteur (10, 11) diposé sous le trajet des potences (6) pour recevoir les muscles prélevés aux différents postes de traitement (8), et un dispositif de transfert et de chargement automatique (14) muni d'un organe de préhension capable d'effectuer un mouvement télescopique suivi d'un mouvement de rotation afin de déplacer un quartier initialement suspendu à un rail 17 jusqu'à une potence d'accrochage (6) se trouvant dans une zone (4) de la boucle fermée constituant un poste d'accrochage.

FIG.1

EP 0 233 795 A1

## Description

PROCEDE ET INSTALLATION DE TRAITEMENT DE VIANDE DE BOVINS OU AUTRES QUADRUPEDES

La présente invention a pour objet un procédé et une installation permettant le traitement semi-automatique de quartiers de viande de bovins ou autres quadrupèdes qui se présentent initialement suspendus verticalement. Le traitement de ces quartiers met en oeuvre une succession d'opérations manuelles ou automatiques de prélèvement des muscles sans désossage.

Jusqu'à présent les différentes opérations de traitement sur les quartiers de bovins nécessitent de la part des opérateurs, des efforts non négligeables, les quartiers devant plusieurs fois être retournés sur une table de travail pour permettre le décollage de certaines parties du quartier, le désossage et ensuite le découpage des muscles.

La présente invention a pour objet un procédé et une installation qui permettent de diminuer considérablement les efforts nécessaires pour effectuer ces traitements tout en accélérant sensiblement la vitesse grâce à une automatisation et à une présentation du quartier dans une position qui facilite largement le travail des opérateurs. Il est ainsi possible de procéder au prélèvement des muscles dans une position ergonomique économisant les mouvements et favorisant la qualité du travail.

Le procédé de traitement semi-automatique de l'invention s'applique à des quartiers de viande de bovins ou autres quadrupèdes se présentant initialement suspendus. Le procédé de l'invention comprend les étapes suivantes : on déplace le quartier depuis une position initiale jusqu'à un poste d'accrochage faisant partie d'une boucle fermée muni d'un rail aérien et d'une pluralité de moyens d'accrochage de quartiers en déplacement continu le long dudit rail. Après accrochage du quartier sur un moyen d'accrochage, on déplace le quartier suspendu verticalement à une hauteur constante, devant une pluralité de postes de traitement disposés à intervalle le long du trajet en boucle fermée. On procède au prélèvement des muscles du quartier successivement à chaque poste en permettant un déplacement vertical dans les deux sens commandé par chaque opérateur à chaque poste de traitement de façon à lui permettre de se placer dans la position ergonomique la plus adaptée à son travail et de modifier continuellement sa position par rapport aux quartiers qui se déplacent devant son poste. On libère ensuite au dernier poste de traitement les os subsistant après le prélèvement de l'ensemble des muscles de chaque quartier de façon à permettre au moyen d'accrochage ainsi libéré de saisir un nouveau quartier à traiter.

On autorise de préférence une rotation du quartier su lui-même à au moins certains postes de traitement de façon à permettre le prélèvement des muscles sur toute la périphérie du quartier. Aux autres postes de traitement on maintient au contraire le quartier de façon à éviter toute rotation sur lui-même, en le saisissant dans la zone des vertèbres par exemple les vertèbres dorsales et lombaires dans le cas d'un quartier arrière.

Devant certains postes on peut de préférence modifier l'inclinaison du quartier par rapport à la verticale de façon, là encore, à faciliter certaines opérations de prélèvement des muscles.

Après avoir prélevé une partie des muscles d'un quartier et assuré le maintien de la partie inférieure du quartier, on peut, dans le cas d'un quartier arrière, sectionner le quartier en deux portions de façon à permettre une rotation libre de la cuisse toujours suspendu verticalement pour le prélèvement des muscles restant sur la cuisse. La partie inférieure du quartier poursuit son déplacement en même temps que la cuisse le long du même trajet en boucle fermée, permettant également le prélèvement des muscles restant sur cette partie inférieure.

L'installation de traitement semi-automatique de quartiers de viande de bovins ou autres quadrupèdes selon l'invention permet la mise en oeuvre du procédé de l'invention. L'installation comprend un agencement de rail aérien de niveau constant formant une boucle fermée et sur lequel sont suspendues à intervalles réguliers une pluralité de potences d'accrochage à intervalles réguliers. L'installation comporte des moyens d'entraînement en continu de l'ensemble des potences le long de la boucle fermée du rail aérien ainsi qu'une pluralité de postes de traitement fixes disposés le long d'au moins une portion de la boucle fermée et à l'extérieur de celle-ci. Chaque poste comprend une plate-forme équipée de moyens de déplacement vertical automatique à commande manuelle. Un agencement d'évacuation, par exemple sous forme de tapis transporteurs, est disposé sous le trajet des potences afin de recevoir les muscles prélevés aux différents postes de traitement par les opérateurs.

L'installation comporte en outre un dispositif de chargement et de transfert automatique muni d'un organe de préhension des quartiers capable de préférence d'effectuer un mouvement télescopique suivi d'un mouvement de rotation afin de déplacer un quartier initialement suspendu à un crochet jusqu'à une potence d'accrochage de l'installation lorsqu'elle se trouve dans une zone de la boucle fermée qui constitue un poste d'accrochage.

Une centrale d'alimentation en énergie, par exemple en énergie électrique et pneumatique, est disposée à l'intérieur de la bouche fermée. La centrale d'alimentation en énergie comprend un collecteur central fixe coopérant avec un élément rotatif, par exemple en forme de plateau, entraîné en synchronisme avec les potences d'accrochage. Le plateau supporte un ou plusieurs moyens distributeurs pour des conduites d'alimentation en énergie, chaque moyen distributeur étant relié à une groupe de potences.

C'est ainsi qu'il est possible de prévoir sur chaque potence un certain nombre d'organes entraînés ou commandés électriquement ou pneumatiquement ainsi que des câbles électriques d'alimentation et des conduites d'air comprimé qui sont enroulées sur un certain nombre d'enrouleurs à rappel élastique dont chacun reçoit une conduite d'alimentation reliée à une groupe de potences.

Une telle disposition est particulièrement avantageuse dans le cas où la boucle fermée du rail aérien est de forme générale allongée. L'alimentation en énergie, par exemple électrique et pneumatique est alors assurée par l'intermédiaire de ces conduites dont la tension est maintenue constante par les enrouleurs entraînés en rotation par le plateau de la centrale d'alimentation disposée à l'intérieur de la boucle fermée, le mouvement de rotation étant synchronisé avec le mouvement de l'ensemble des potences le long de la boucle fermée du rail aérien.

Une telle disposition présente l'avantage d'une centrale unique pour l'ensemble des potences, ce qui simplifie leur structure et permet de simplifier et d'alléger l'ensemble de l'installation.

Chaque potence comprend de préférence un dispositif de suspension oscillant comportant des galets coopérant avec le rail aérien et des moyens d'accrochage du quartier, comprenant une pince verticale à commande pneumatique automatique montée en rotation libre sur un axe vertical. Grâce à cette disposition, il est possible d'entraîner manuellement une rotation du quartier pour prélever les muscles sur toute la périphérie de ce dernier. De plus une oscillation de faible amplitude peut être obtenue ce qui permet également de mieux présenter certaines portions du quartier en vue du prélèvement des muscles à certains postes de traitement.

La potence comporte en outre une barre sensiblement verticale fixée dans sa partie haute au dispositif de suspension du côté intérieur de la boucle fermée par rapport au quartier. Au moins une pince horizontale à commande automatique pneumatique est montée sur ladite barre soit de manière fixe soit de manière pivotante et adaptée pour venir serrer une partie du squelette du quartier suspendu à au moins certains postes de traitement.

Dans un mode de réalisation adapté au cas d'un quartier arrière, la barre de chaque potence comporte deux pinces horizontales placées l'une au-dessus de l'autre permettant ainsi d'assurer un bon maintien de la partie inférieure du quartier par serrage en deux points de la zone des vertèbres dorsales.

L'actionnement de ces pinces se fait de façon automatique lorsque l'opérateur exerce une poussée sur le quartier suspendu par la pince verticale jusqu'à ce qu'une partie déterminée du squelette pénètre à l'intérieur des pinces horizontales.

Chaque potence supporte en outre de préférence un boîtier de distribution d'énergie monté sur la barre précitée et relié par au moins une conduite d'alimentation d'énergie à la centrale d'alimentation qui se trouve à l'intérieur de la boucle fermée comme on la indiqué précédemment.

Les différentes pinces qui permettent le serrage non seulement en partie haute du quartier mais également d'autres parties du squelette, par exemple pour un quartier arrière, la zone des vertèbres, ont une structure un peu analogue. Elles comprennent deux branches de mâchoire pivotantes montées sur un axe solidaire de l'extrémité de la tige d'un vérin pneumatique et un moyen de butée coopérant avec les branches pour provoquer leur fermeture automatique lors d'un mouvement de retrait de la tige du vérin. Des moyens de retenue des mâchoires sont en outre prévus pour provoquer l'ouverture automatique desdites mâchoires lors d'un mouvement d'avance de la tige du vérin. Une telle disposition présente l'avantage de la simplicité et de la robustesse. Bien entendu d'autres moyens pourraient être envisagés dans le même but.

Un détecteur de présence par contact est avantageusement monté entre les branches de mâchoires et commande l'action du vérin lors de la pénétration d'une portion du quartier entre les branches. Cette pénétration peut être faite par une poussée de l'opérateur lui-même sur le quartier ou de façon automatique au poste d'accrochage.

Pour éviter tout accident en cas d'interruption passagère et accidentelle de l'alimentation en énergie, la pince verticale à laquelle est suspendu le quartier comporte en outre un dispositif de blocage de sécurité des mâchoires en position fermée. Ce dispositif comprend une fourchette transversale actionnée par un vérin de blocage venant immobiliser la tige du vérin d'actionnement des mâchoires.

Une pluralité de capteurs de position sont prévus sur les potences et à des endroits déterminés de l'installation dans le trajet desdites potences. Ces capteurs coopèrent avec des cames fixes disposées le long du trajet des potences ou des cames solidaires des potences, afin de commander automatiquement une partie des mouvements d'ouverture et de fermeture des pinces. Les opérateurs n'ont ainsi pas à se préoccuper de ces mouvements et peuvent se consacrer entièrement au prélèvement des muscles.

L'installation comporte en outre un rail inférieur diposé à l'intérieur de la boucle formée par le rail aérien précité et formant également une boucle de forme générale analogue afin de guider l'extrémité inférieure des barres des potences. Dans le cas du traitement de quartiers arrière, le rail inférieur présente des décrochements dans son trajet et coopère avec les extrémités basses des barres des potences afin de faire varier automatiquement l'inclinaison de ces barres à certains postes de traitement. C'est ainsi en particulier que pour les premiers postes la barre est inclinée par rapport à la verticale afin d'empêcher que les pinces horizontales de vertèbres n'entrent en contact avec le quartier arrière. Il est ainsi possible aux opérateurs de procéder aux opérations de prélèvement des muscles sur toute la périphérie du quartier arrière en faisant tourner celui-ci sur lui-même, le quartier arrière n'étant maintenu que par la pince verticale du jarret par lequel il est suspendu.

Chaque plate-forme de l'installation est montée en vue de son déplacement vertical sur un châssis vertical fixe par l'intermédiaire de galets. Le déplacement vertical de la plate-forme est obtenu au moyen d'un vérin pneumatique ou hydraulique à double effet commandé par une barre transversale pivotante qui est disposée de façon à pouvoir être actionnée facilement par la jambe de l'opérateur. En exerçant une poussée plus ou moins importante sur cette barre pivotante, l'opérateur peut commander un déplacement soit vers le haut soit vers le bas de la plate-forme sans avoir besoin de cesser ses opérations de prélèvement de muscles. L'opératuer peut donc se placer dans la position la plus ergonomique pour chaque prélèvement de muscle du quartier qui se déplace devant son poste de traitement. On comprendra que la commande de déplacement de la plate-forme pourrait être réalisée par d'autres moyens. Toutefois, il convient de préférence que cette commande puisse être faite sans que l'opérateur n'ait besoin d'arrêter son travail. La longueur de la plate-forme est choisie de façon que l'opérateur puisse suivre le quartier sur une partie de son déplacement continu devant le poste de traitement, sans que l'opérateur ait besoin de quitter la plate-forme.

Le bras de transfert télescopique de l'installation est monté sur une couronne dentée pouvant être entraînée en rotation et pouvant être déplacée verticalement sous l'action d'un vérin hydraulique. Le bras de transfert télescopique est monté pivotant sur la couronne, un vérin hydraulique commandant son inclinaison par rapport à l'horizontale. Une pince d'accrochage transversale du quartier est montée à l'extrémité du bras de transfert télescopique.

Ce bras de transfert télescopique est commandé automatiquement de façon à subir les mouvements suivants : un déplacement télescopique horizontal jusqu'à ce que la pince d'accrochage transversale ait saisi le quartier, par exemple par la partie supérieure de la cuisse dans le cas d'un quartier arrière. Un mouvement combiné de rotation et d'élévation, de préférence su un angle de l'ordre de 90°, permettant de placer le quartier suspendu à l'extrémité du bras de transfert devant un poste d'accrochage. Un pivotement vers le haut afin d'introduire l'extrémité du quartier entre les mâchoires de la pince verticale d'une des potences au poste d'accrochage.

La combinaison de ces mouvements permet de transférer un quartier initialement suspendu par un crochet jusqu'au poste d'accrochage de l'installation à la suite de quoi le quartier est transporté le long de la boucle du rail aérien devant chacun des postes de traitement successifs.

Malgré l'avantage certain de ce dispositif de chargement et de transfert particulier, on comprendra que d'autres moyens de transfert pourraient être utilisés pour accrocher un quartier par son extrémité supérieure, jarret ou collier, au poste d'accrochage de l'installation.

Un dispositif automatique de coupe est avantageusment prévu dans le cas d'un quartier arrière pour sectionner le tendon, libérant ainsi le crochet auquel était initialement suspendu le quartier arrière.

L'invention sera mieux comprise par l'étude de la description détaillée d'un mode de réalisation particulier d'une installation de traitement de quartiers arrière de bovins pris à titre d'exemple nullement limitatif et illustrée par les dessins annexés sur lesquels :

la figure 1 est une vue schématique de dessus montrant l'ensemble des éléments essentiels d'une installation selon l'invention;

la figure 2 est une vue en élévation en coupe partielle du dispositif de chargement et de transfert de quartiers arrière;

la figure 3 est une vue en élévation schématique montrant le poste d'accrochage pendant une opération d'accrochage d'un quartier arrière;

la figure 4 est une vue en élévation du premier poste de traitement montrant un opérateur entrain de prélever les muscles sur un quartier arrière simplement suspendu et pouvant de ce fait subir une rotation sur lui-même;

la figure 5 est une vue en élévation schématique analogue à la figure 4 mais prise à un poste de traitement ultérieur dans lequel le quartier arrière suspendu est également maintenu par la zone des vertèbres dorsales et lombaires;

la figure 6 est une vue en coupe agrandie de la pince verticale de jarret d'une des potences de l'installation;

la figure 7 est une vue en coupe partielle selon VII-VII de la figure 6 montrant de manière détaillée le dispositif de blocage de sécurité de la pince de jarret;

la figure 8 est une section de dessus selon VIII-VIII de la figure 7 de la pince de jarret montrant le dispositif de sécurité en position de blocage;

la figure 9 est une vue de dessus en coupe partielle d'une des pinces horizontales destinée à serrer la zone des vertèbres dorsales;

la figure 10 est une vue en élévation de l'une des plate-formes utilisées aux postes de traitement de l'installation; et

les figures 11 et 12 illustrent le découpe du tendon d'un quartier arrière.

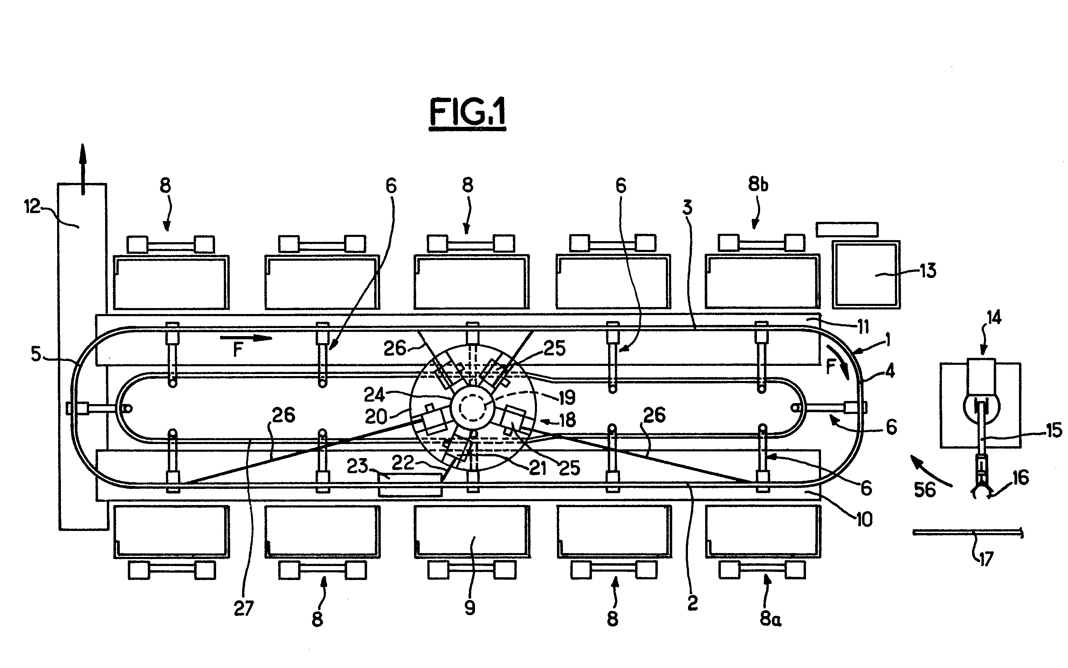

Telle qu'elle est représentée schématiquement sur la figure 1, l'installation comprend un rail aérien 1 formant une boucle fermée allongée. Le rail 1 est maintenu à un niveau constant sur toute la boucle, laquelle est constituée de deux portions rectilignes 2 et 3 et de deux portions sensiblement circulaires 4 et 5 qui relient les portions rectilignes 2 et 3.

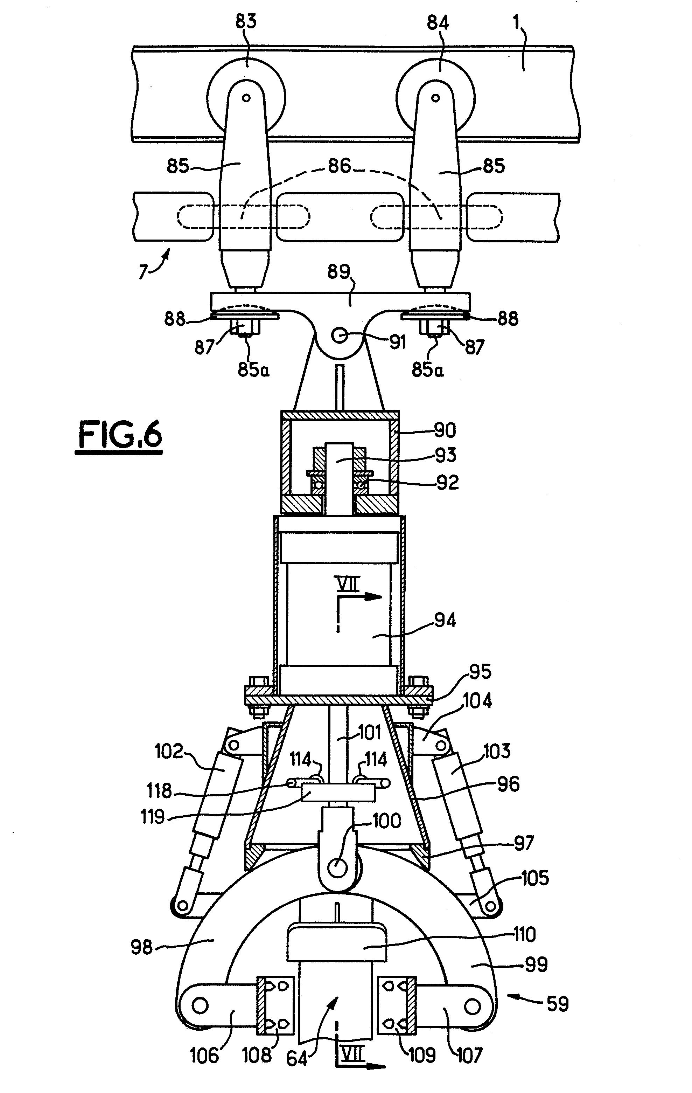

Une pluralité de potences d'accrochage 6 sont suspendues à intervalles réguliers le long du rail aérien 1. L'entraînement des différentes potences ainsi que leur maintien à intervalles fixes réguliers est obtenu au moyen d'une chaîne 7 visible en particulier sur la figure 6 et qui est mise en mouvement par un mécanisme à picots de type classique (non représenté sur les figures), les picots entraînés venant coopérer avec les maillons de la chaîne 7.

Une pluralité de postes de traitement fixes 8 sont disposés à l'extérieur de la boucle fermée du rail 1 et de manière plus précise, dans l'exemple illustré, le long des deux portions rectilignes 2 et 3. Dans l'exemple illustré, cinq postes de traitement 8 sont ainsi disposés de chaque côté de la boucle du rail 1, et douze potences 6 sont suspendues au rail 1 de sorte que lorsqu'une potence 6 se trouve exactement dans l'axe d'un poste de traitement 8, il se trouve encore une potence dans l'axe de la zone semi-circulaire 5 qui n'est pas utilisée et une potence dans l'axe de la zone semi-circulaire 4 qui constitue un poste d'accrochage.

Chaque poste de traitement 8 est équipé d'une plate-forme 9 pouvant se déplacer verticalement au moyen d'un dispositif élévateur à commande manuelle.

Un tapis transporteur 10 se déplaçant de la droite vers la gauche sur la figure 1, permet l'évacuation des muscles prélevés aux différents postes 8 se trouvant le long de la portion rectiligne 2. Un tapis transporteur analogue 11 se déplaçant également de la droite vers la gauche sur la figure 1, permet de la même manière l'évacua tion des muscles prélevés aux postes 8 situés le long de la portion rectiligne 3.

Les deux tapis transporteurs 10 et 11 déversent les muscles ainsi prélevés, sur un tapis d'évacuation 12 dont le trajet est perpendiculaire à celui des précédents, les muscles étant ainsi amenés dans un atelier de traitement ultérieur. Bien entendu d'autres moyens pourraient parfaitement être envisagés pour l'évacuation des muscles prélevés, tels que chariots de transport ou balancelles suspendues individuelles.

L'ensemble des potences 6 entraînées par la chaîne 7 se déplace dans le sens des flèches F. Le premier poste de traitement 8a est donc celui qui se trouve dans la portion rectiligne 2 immédiatement en aval du poste d'accrochage situé dans la zone semi-circulaire 4 tandis que le dernier poste de traitement 8b se trouve le long de la portion rectiligne 3, immédiatement avant le même poste d'accrochage. Les os qui subsistent après le prélèvement de l'ensemble des muscles du quartier sont éliminés dans la bac 13.

L'installation comporte encore un dispositif de transfert et de chargement automatique 14 comportant un bras télescopique 15 muni d'une pince de préhension 16 et susceptible de subir un mouvement de rotation afin de déplacer un quartier initialement suspendu à un rail de transport 17 jusqu'à la zone d'accrochage du rail 1 située dans la portion semi-circulaire 4.

Une centrale d'alimentation en énergie électrique et pneumatique référencée 18 dans son ensemble est diposée à l'intérieur de la boucle fermée, sensiblement dans sa portion médiane. La centrale 18 comporte un collecteur fixe 19 muni de bagues périphériques coopérant avec des balais de friction (non représentés sur la figure) qui permettent la transmission de l'électricité jusqu'à un système distributeur monté sur un plateau rotatif 20 entraîné en synchronisme avec le mouvement des potences 6. Un enrouleur 21 permet l'enroulement d'un câble électrique relié aux balais de frottement précités. Le câble électrique 22 enroulé sur l'enrouleur 21 est en outre relié au boîtier de commande et de pilotage 23 de l'ensemble de l'installation. Ce boîtier est suspendu au rail 1 et se déplace comme les potences 6 par l'intermédiaire de la chaîne 7. L'enrouleur 21 permet donc l'alimentation en énergie électrique de l'ensemble de l'installation tout en maintenant constante la tension du câble d'alimentation 22.

A l'intérieur du collecteur central fixe 19 sont logées des canalisations d'amenée d'air comprimé qui est transmis par l'intermédiaire d'un joint tournant 24 à quatre enrouleurs 25 sur lesquels sont enroulés des canalisations souples 26 reliées à des points déterminés sur la chaîne 7 de façon à alimenter en énergie pneumatique un groupe de plusieurs potences 6. Les enrouleurs 25 permettent donc de maintenir constante la tension des canalisations souples 26 lors du déplacement de leur point d'application sur les chaînes 7 le long du rail 1 et ce, malgré la forme allongée de la boucle formée par le rail 1.

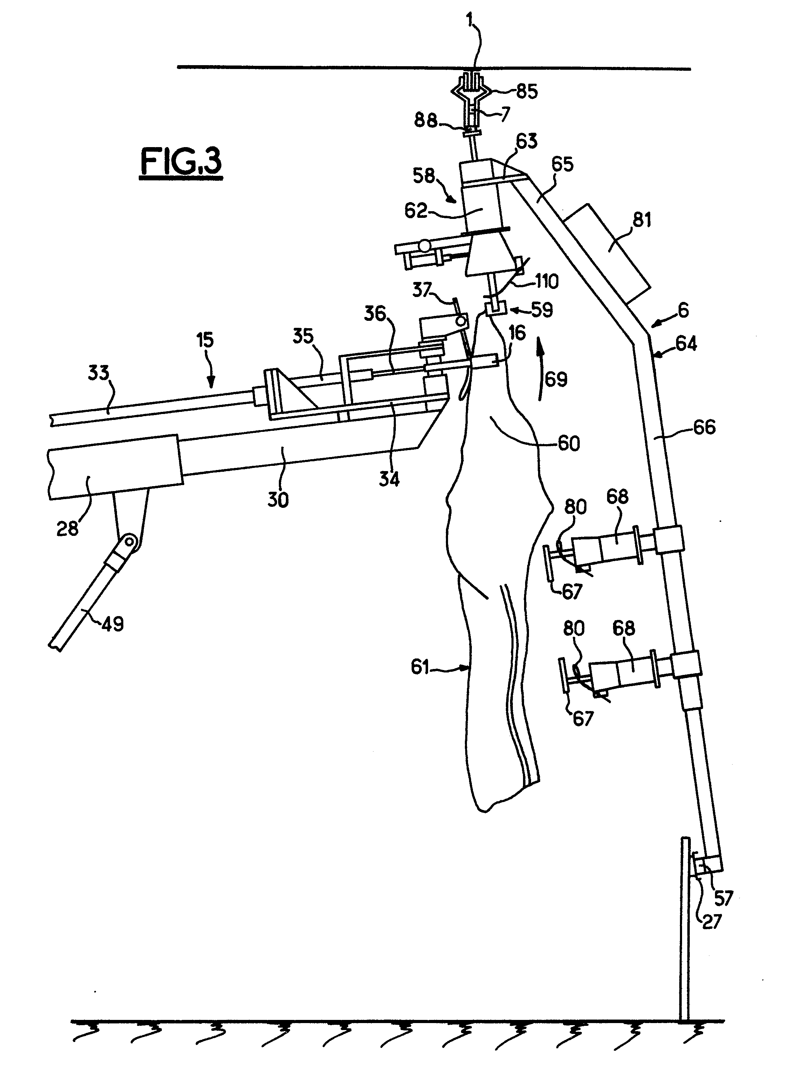

On notera que pour simplifier les dessins le câble électrique 22 ainsi que les canalisations d'air comprimé 26 n'ont pas été représentés sur les figures 3 à 5.

L'installation comporte en outre un rail inférieur 27 disposé à l'intérieur de la boucle du rail supérieur 1 et formant également une boucle de même forme générale analogue. Toutefois, dans l'exemple illustré, le rail inférieur 27 est plus écarté du rail aérien 1 dans la zone des deux premiers postes de traitement ainsi que dans celle des deux derniers postes de traitement. Les extrémités inférieures des potences 6 comportent des galets qui se déplacent le long du rail inférieur 27 ce qui permet, compte tenu des décrochements ainsi obtenus dans son trajet, de faire varier automatiquement l'inclinaison des potences 6 selon les postes de traitement. Les potences 6 sont en effet maintenues par leurs extrémités supérieures qui se déplacent le long du rail aérien 1 et par leurs extrémités inférieures qui se déplacent le long du rail inférieur 27.

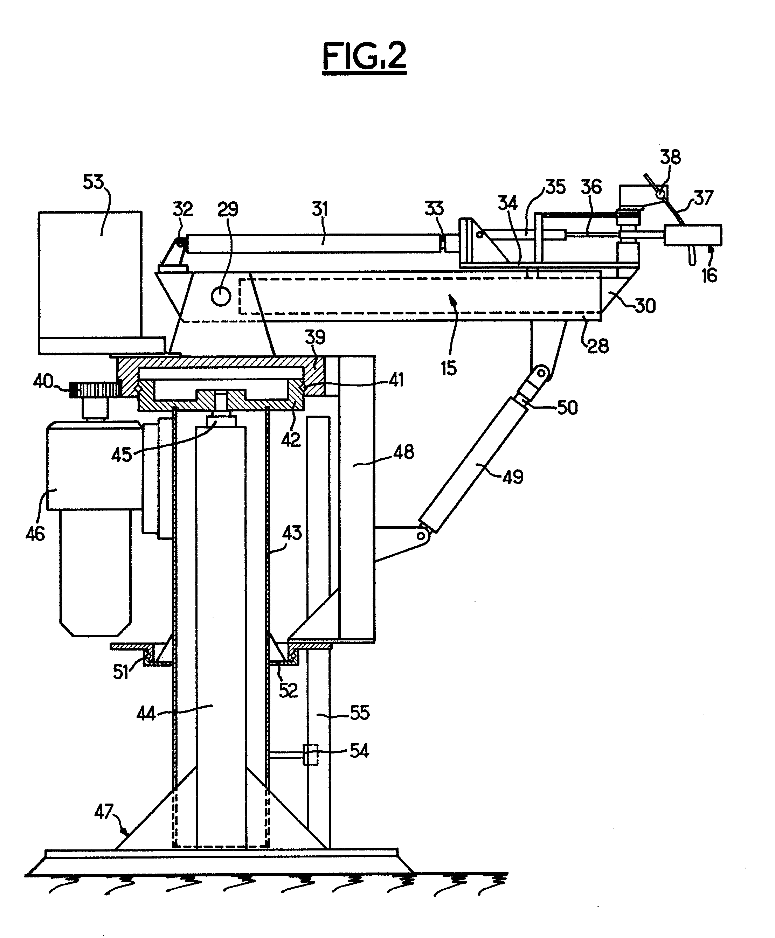

En se reportant à la figure 2 qui illustre le dispositif de transfert et de chargement, on retrouve le bras télescopique 15 muni de la pièce d'accrochage 16.

Le bras télescopique 15 comprend un longeron 28 monté pivotant autour d'un axe horizontal 29 et une prolongation coulissante, 30 qui peut se déplacer en translation à l'intérieur du longeron 28 sous l'action du vérin hydraulique 31 dont le cylindre est fixé en 32 à l'extrémité du longeron 28 tandis que la tige 33 est reliée par une plaque 34 à l'extrémité de la prolongation 30. Dans ces conditions on comprend que l'action du vérin 31 permet d'allonger de façon télescopique le bras de transfert 15 en faisant coulisser la prolongation 30 à l'intérieur du longeron 28.

La plaque 34 permet le montage d'un vérin hydraulique 35 dont la tige 36 commande l'ouverture et la fermeture des deux mâchoires de la pince de préhension 16. Le vérin 35 est commandé par un capteur de présence 37 monté sur un axe de pivotement 38.

Le longeron 28 est monté par son axe 29 sur la bague extérieure rotative 39 d'une couronne dentée entraînée en rotation par le pignon 40 et montée par un palier à roulement 41 autour d'une bague interne fixe 42. La bague fixe 42 est solidaire d'une colonne verticale 43 fixe en rotation et à l'intérieur de laquelle est monté un vérin hydraulique 44 dont la tige 45 vient prendre appui sur la bague intérieure 42 solidaire de la colonne 43. Le moteur hydraulique 46 qui entraîne en rotation le pignon 40 est fixé sur la périphérie de la colonne 43. Pour empêcher la rotation de la colonne 43, un galet 54 solidaire de la couronne 43 coopère avec une glissière verticale fixe 55 montée dans le sol. Le cylindre du vérin hydraulique 44 prend appui sur le sol par l'intermédiaire d'une embase 47. Une poutre verticale 48 montée entre la bague extérieure 39 et la colonne 43, sert d'appui à un vérin hydraulique 49 dont la tige 50 est reliée à l'extrémité libre du longeron 28 de façon à permettre un pivotement de ce dernier vers le haut autour de son axe 29. La partie basse de la poutre 48 est maintenue par l'intermédiaire d'une butée à billes 51 dont la bague extérieure fixe en rotation 52 est solidaire de la colonne 43.

L'alimentation en fluide hydraulique de l'ensemble du dispositif de transfert et de chargement est faite par la centrale hydraulique 53 et qui est montée sur la bague extérieure rotative 39.

Le dispositif de transfert et de chargement permet un mouvement combiné automatique du bras 15 portant la pince 16 et par conséquent d'un quartier de viande qui s'y trouve accroché. En effet le bras télescopique 15 peut être déplacé en translation sous l'action du vérin hydraulique 31; son inclinaison par rapport à l'horizontale peut être modifiée par l'action du vérin hydraulique 49; une rotation autour d'un axe vertical de l'ensemble du bras 15 peut être obtenue par action du pignon 40 qui provoque la rotation de la bague extérieure 39 qui supporte le bras télescopique 15 ainsi que la poutre 48 et le vérin 49. De plus le bras télescopique 15 peut être déplacé verticalement en actionnant le vérin hydraulique 44 ce qui provoque le soulèvement de la bague intérieure 42 et de la colonne 43.

Ce dispositif est capable de venir accrocher par l'extrémité du jarret un quartier arrière suspendu au rail 17 (figure 1) à un certain niveau, puis de transférer le quartier suspendu par la pince 16 en lui faisant subir une rotation d'un angle d'environ 90° (comme on peut le voir sur la figure 1 selon la flèche 56) tout en le soulevant par l'action du vérin hydraulique 44 jusqu'à atteindre le niveau nécessaire pour la préhension du jarret par une potence 6 supportée par le rail aérien 1 à un niveau supérieur à celui du rail 17. Le quartier est généralement suspendu au rail 17 par un crochet. Pour libérer le quartier de ce crochet on peut prévoir un dispositif de coupe automatique du tendon qui est actionné dès que la pince 16 s'est refermée sur le jarret. Le pivotement supplémentaire vers le haut provoqué par l'action du vérin hydraulique 49 permet de faciliter cet accrochage comme on peut le constater sur la figure 3.

En se référant à la figure 3 on voit en effet à nouveau schématiquement une partie du dispositif de transfert et de chargement illustré sur la figure 2. On retrouve également, représentés de manière schématique et en coupe le rail aérien 1 et une potence 6 solidaire par son extrémité supérieure de la chaîne 7 et s'appuyant par son extrémité inférieure sur le rail 27 par l'intermédiaire d'un galet 57.

La potence 6 illustrée sur la figure 3 est identique à toutes les potences de l'installation. Elle comprend un dispositif de suspension oscillant référencé 58 dans son ensemble et muni de moyens d'accrochage comprenant une pièce 59 pour le jarret 60 d'un quartier arrière de bovin 61. La pince 59 est commandée par un dispositif 62 monté en rotation autour d'un axe vertical sur une platine 63. Une barre 64 sensiblement verticale est fixée dans sa partie haute à la platine 63, par exemple par soudure. La barre 64 comporte une partie haute inclinée par rapport à la verticale référencé 65 et une partie inférieure 66 plus longue, qui peut occuper une position sensiblement verticale devant certains postes de traitement ou une position légèrement inclinée par rapport à la vericale comme illustré sur la figure 3 en fonction de la position du rail 27 par rapport à celle du rail aérien 1. On notera que, l'extrémité de la barre 64 n'étant pas liée au rail 27 mais seulement guidée par ce dernier, la barre 64 peut également être inclinée dans un autre plan, en avant ou en arrière par rapport à l'axe de suspension du quartier.

Sur la portion allongée 66 de la barre 64 sont fixées de manière rigide et perpendiculairement à ladite portion 66, deux pinces horizontales 67 munies de leur dispositif de commande 68. L'inclinaison par rapport à la verticale de la barre 64, autorisée par le dispositif de suspension oscillant 58 et provoquée par l'écartement du rail 27 permet d'éloigner les pinces d'accrochage 67 du quartier 61 qui est présenté à ce poste d'accrochage en étant suspendu par la pince 16 du bras télescopique 15. Les pinces 67 pourraient également être montées mobiles en rotation ou en pivotement sur la barre 64. Dans une variante non illustrée, on peut prévoir un dispositif d'escamotage des pinces 67, comprenant par exemple pour chaque pince 67 un vérin provoquant une rotation limitée de la pince 67 par rapport à la barre 64 de façon à éviter tout contact entre le quartier 61 et l'extrémité des pinces 67 qui se trouvent alors légèrement décalées ou escamotées par rapport à la position illustrée sur la figure 3. L'inclinaison de la barre 64 provoque par ailleurs une inclinaison correspondante du dispositif de suspension 58 et de la pince d'accrochage de jarret 59. Le mouvement de pivotement du bras télescopique 15 provoqué par l'action du vérin hydraulique 49 permet d'introduire aisément l'extrémité haute du jarret 60 jusqu'à l'intérieur de la pince d'accrochage 59 et ce malgré l'inclinaison de ladite pince 59. Ce mouvement, qui se fait selon un cercle centré sur l'axe 29 du longeron 28 (figure 2) est exagéré sur la figure 3 pour mieux le faire comprendre et est symbolisé par la flèche 69.

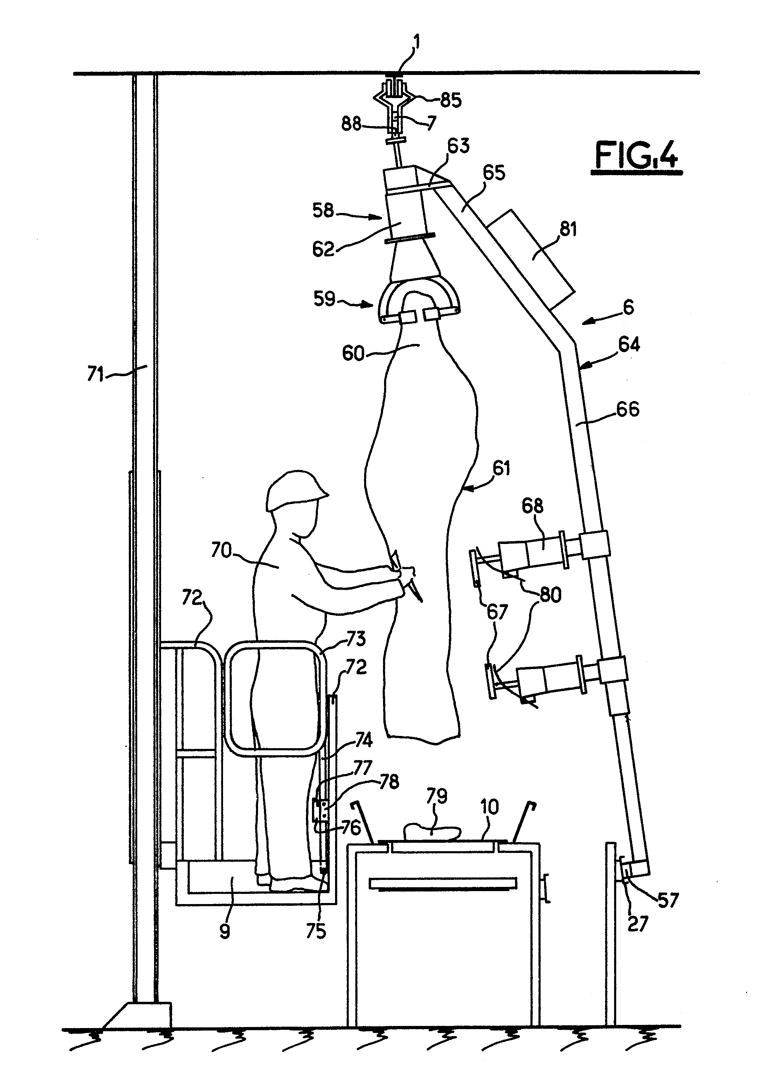

La figure 4 illustre schématiquement le premier poste de travail de l'installation, référencé 8a sur la figure 1. On retrouve les organes identiques qui portent les mêmes références.

La barre 64 se trouve maintenue dans la même position inclinée par rapport à la verticale qu'au poste d'accrochage illustré sur la figure 3 au moyen du rail inférieur 27. Les pinces de vertèbres 67 sont donc également écartées du quartier 61 ce qui permet à l'opérateur 70 de prélever les muscles sur toute la périphérie du quartier 61 en faisant tourner celui-ci sur lui-même, le dispositif de suspension 58 pouvant tourner autour de son axe vertical de 180° dans un sens et dans l'autre. Sur la figure 4, on a représenté, à titre d'exemple, le quartier 61 tourné de 90° par rapport à la position illustrée sur la figure 3.

On note également sur la figure 4 l'existence de la plate-form 9 montée en vue de son déplacement vertical sur un châssis vertical fixe 71. La plate-forme 9 présente des garde-fous 72 ainsi qu'une porte 73 et une barre pivotante 74 s'étendant trasversalement devant l'opérateur 70 à la hauteur de ses jambes. La barre 74 est montée pivotante autour d'un axe 75 et porte une platine de commande 76 présentant un décrochement 77. Un capteur 78 peut coopérer soit avec la platine 76 soit avec le décrochement 77 pour provoquer la montée ou la descente de la plate-forme 9. L'opérateur 70 peut donc facilement commander, en appuyant plus on moins sur la barre 74, le mouvement de montée ou de descente de la plate-forme 9 de façon à se placer dans la position la plus ergonomique pour le prélèvement manuel des muscles au couteau.

On voit également en coupe sur la figure 4 le tapis transporteur 10 qui reçoit les muscles 79 prélevés par l'opérateur 70 à ce poste de traitement l'opérateur 70 se déplace dans la plate-forme 9 en suivant le mouvement lent continu du quartier suspendu à la potence 6 qui se déplace devant lui.

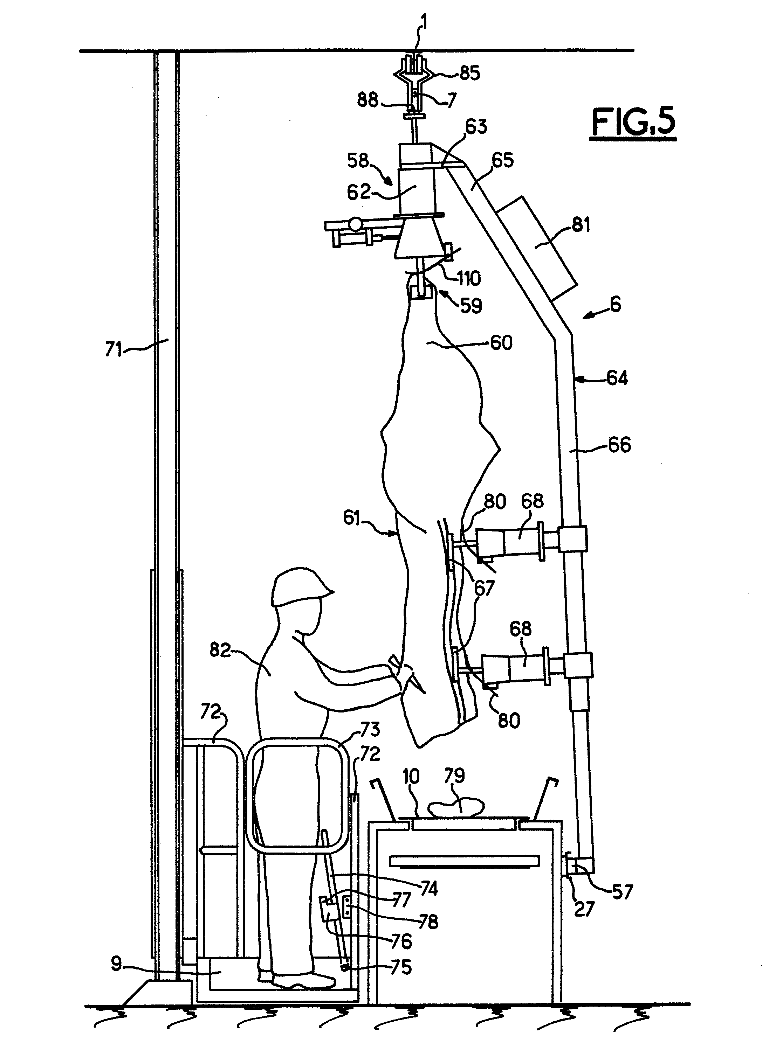

La figure 5 illustre de la même manière un poste de traitement ultérieur. A ce poste, le rail 27 est moins écarté du rail aérien 1 qu'au poste illustré à la figure 4. Dans ces conditions, la barre 64 a pris une position sensiblement verticale. Les deux pinces de vertèbres 67 sont venues en position pour pouvoir serrer la zone des vertèbres du quartier 61. La saisie du quartier 61 a été faite par l'un des opérateurs soit au poste illustré sur la figure 5 soit à un poste précédent, en exerçant une simple poussée de peu d'amplitude sur le quartier 61. La zone des vertèbres du quartier 61 a alors pénétré entre les mâchoires des pinces de vertèbres 67 ce qui a provoqué le déplacement des capteurs 80 commandant la fermeture des mâchoires 67. On notera que la fermeture est commandée par un système automatique dont les éléments sont inclus dans l'armoire individuelle de commande 81 portés par la portion supérieure 65 de la potence 6. L'armoire 81 de chaque potence 6 est alimentée en énergie électrique par le câble 22 provenant de l'enrouleur 21 (figure 1). L'énergie pneumatique est amenée à chaque potence 6 par une conduite non représentée qui suit sensiblement le trajet de la chaîne 7 et qui est reliée en plusieurs points aux conduites 26 provenant des enrouleurs 25 (figure 1.

La quartier 61 se trouve donc maintenu fermement par les pinces de vertèbres 67 tout en restant suspendu par la pince supérieure de jarret 59. Ce maintien évitant toute rotation du quartier 61, facilite le travail de prélèvement des muscles de l'opérateur 82.

Sur la figure 5 on a représenté à titre d'exemple une position de l'opérateur 82 plus élevée que sur la figure 4. On comprendra cependant qu'au cours de son travail de prélèvement des muscles, chaque opérateur règle sa position en permanence pour se mettre à tout instant dans la position la plus ergonomique.

Le procédé de l'invention se déroule par exemple de la manière suivante, en se référant aux figures 1 à 5 : le quartier est tout d'abord saisi par le bras télescopique 15 et déplacé jusqu'au poste d'accrochage illustré à la figure 3 où il est accroché par l'extrémité du jarret.

Le quartier, ainsi accroché et suspendu à une potence 6 commence son déplacement le long de la boucle fermée du rail aérien 1. Il passe tout d'abord devant les deux premiers postes le long de la portion rectiligne 2 de la boucle. Devant ces deux postes, le quartier peut être tourné manuellement par les opérateurs en vue du prélèvement des muscles, en particulier bavette, filet, noix, rumsteack sur toute le périphérie du quartier.

Au troisième poste, l'opérateur tourne le quartier de façon à pouvoir pousser la zone des vertèbres à l'intérieur des pinces de vertèbres 67. A ce poste ces pinces sont en position proche du quartier, le rail inférieur 27 ayant permis la suppression de l'inclinaison de la potence 6. Après avoir ainsi fixé la partie basse du quartier, l'opérateur pousuit le prélèvement des muscles.

Le prélèvement (hampe, fausse bavette, plat, gîte, tranche, araignée etc.) se poursuit aux autres postes, le quartier étant toujours maintenu par les pinces de vertèbres 67. On comprendra qu'il serait possible également que certains postes comportent des moyens d'assistance mécanique pour faciliter le prélèvement manuel des muscles. D'autres postes pourraient également être complètement automatisés.

Au septième poste la partie basse du quartier, maintenue par les pinces 67 a été sectionnée du jarret, permettant ainsi de faire tourner le jarret sur lui-même pour terminer le prélèvement des muscles. Au dernier poste 86 (figure 1) les pinces 67 et 59 s'ouvrent automatiquement permettant à l'opérateur de saisir et d'éliminer les os, seuls restant sur la potence 6, en les jetant dans le bac 13.

On se reportera maintenant aux figures 6 à 8 pour examiner le détail de la structure du dispositif de suspension 58 dont chaque potence 6 est équipée.

On retrouve sur ces figures les pièces identiques qui portent les mêmes références que sur les figures précédentes. On retrouve en particulier le rail aérien 1 sur lequel se déplacent deux paires de galets 83 et 84 placées à une distance correspondant à un pas de la chaîne 7. Chaque paire de galets 83, 84 comporte deux galets disposés de chaque côté de l'âme du rail 1. Les galets 83, 84 sont montés à l'extrémité de fourches 85 solidaires chacune d'un maillon 86 de la chaîne 7 ce qui assure l'entraînement de l'ensemble le long du rail 1.

Les extrémités inférieures des fourches 85 présentent des axes 85 serrés par des boulons 87 et des rondelles hémisphériques 88 sur une platine 89 qui sert de suspension à l'ensemble de la potence 6. Grâce à ces rondelles hémisphériques 88 la platine 89 ainsi que l'ensemble de la potence 6 peuvent subir une oscillation de faible amplitude qui permet l'inclinaison de la barre 64 au moyen du rail 27 comme on l'a vu sur les figures 3 et 4.

Un palonnier 90 est suspendu par un axe 91 à la platine 89 ce qui permet également des oscillations autour de l'axe 91 perpendiculairement aux oscillations autorisées par les rondelles hémisphériques 88.

Le palonnier 90 sert de support à une butée à roulement 92 qui permet la rotation de l'axe 93 disposé verticalement et solidaire du cylindre 94 du vérin pneumatique d'actionnement de la pièce 59. Le cylindre 94 est monté sur une plaque horizontale 95 qui est solidaire d'une cloche tronconique 96 dont le bord périphérique ouvert de plus grand diamètre situé du côté inférieur de l'ensemble, comporte un anneau de frottement tronconique 97 entrant en contact avec le bord supérieur des branches 98 et 99 de la pince 59. Les branches 98 et 99 sont solidaires d'un axe d'articulation 100 fixé à l'extrémité de la tige 101 du vérin 94. Deux ressorts pneumatiques latéraux 102 et 103 constitués chacun par un petit vérin pneumatique non commandé maintenu sous haute pression sont fixés entre une patte d'accrochage 104 solidaire de la cloche 96 et une patte d'accrochage inférieure 105 solidaire de l'une des branches 98, 99.

Les extrémités libres des branches 98 et 99 portent des mâchoires à action transversale 106, 107 munies d'extrémités incurvées 108, 109 présentant une pluralité de picots qui peuvent pénétrer dans la chair du jarret en améliorant ainsi la tenue de la pince 59.

On voit également sur la figure 6 l'extrémité active de la palette 110 du capteur de présence du jarret à l'intérieur de la pince 59.

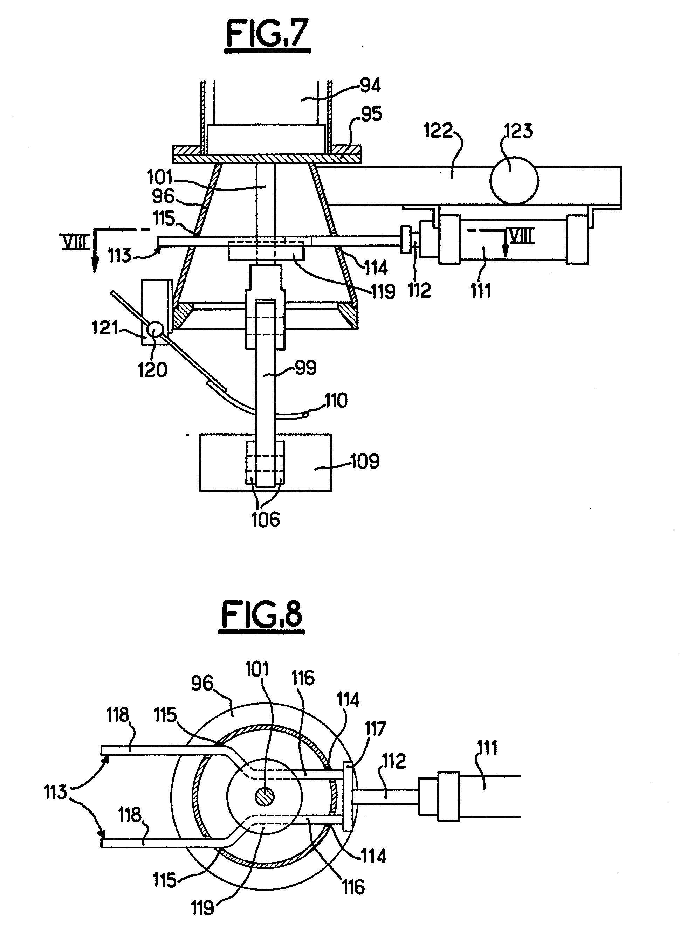

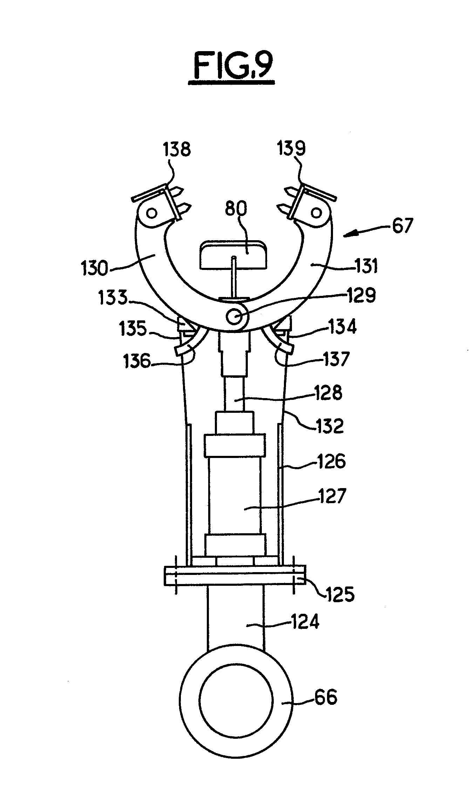

La figure 7 montre le dispositif de sécurité associé à la commande de la pince 59. Ce dispositif de blocage de sécurité se compose d'un vérin pneumatique de blocage 111 dont la tige 112 est reliée à une paire de tiges transversales 113 analogues à une fourchette qui pénètrent par des orifices 114 et 115 à travers les parois de la cloche 96. Comme on peut le voir en particulier sur la figure 8, qui est une section de dessus prise juste au-dessus du niveau de la fourchette formée par les tiges 113, lesdites tiges comportent des portions 116 reliées par une plaque 117 à la tige 112 du vérin 111 et des portions 118 faisant saillie à l'opposé de la cloche 96. L'écartement des portions 118 est supérieur à celui des portions 116.

La tige 101 du vérin 94 d'actionnement des mâchoires 59 présente un disque de retenue 119 qui est rigidement fixé à ladite tige 101 par exemple par soudure. Le diamètre du disque 119 est supérieur à l'écartement des tiges 116 et inférieur à celui des tiges 118 comme on peut le voir sur la figure 8. Lorsque les mâchoires 59 sont fermées c'est-à-dire lorsque la tige 101 a été déplacée vers le haut par le vérin 94, le disque de blocage 119 qui se trouvait initialement légèrement en dessous du niveau de la fourchette 113 comme on peut le voir sur les figures 6 et 7, se trouve au contraire au-dessus de ce niveau. On agit alors sur le vérin 111 de façon à déplacer la tige 112 en direction de la cloche 96, la fourchette 113 se plaçant dans la position illustrée sur la figure 8. Dans cette position, tout mouvement vers le bas de la tige 101 est empêché par les portions 116 de la fourchette 113 dont l'écartement est inférieur au diamètre du disque de blocage 119.

En cas d'interruption accidentelle de l'alimentation en énergie électrique et/ou pneumatique de l'ensemble de l'installation, la tige 101 se trouve donc immobilisée par action du poids des quartiers 61 qui restent maintenus par les pinces 59 en position fermée grâce à ce dispositif de blocage de sécurité.

On observera que dans la position illustrée sur la figure 7 où la tige 112 est rentrée, le disque de blocage 119 passe librement entre les branches 118 de la fourchette 113 permettant ainsi l'ouverture de la pince 59. On notera encore sur la figure 7 le montage du palpeur 110 autour d'un axe de pivotement 120 du capteur 121. De plus le bras de support 122 du vérin 111 comporte à son extrémité deux butées en caoutchouc 123 disposées de part et d'autre qui entrent en contact avec la barre 64 lors d'une rotation de 180° de la pince 59 et de son vérin de commande 94 autour de l'axe 93.

Le fonctionnement de la pince de jarret illustrée sur les figures 6 à 8 est le suivant : lorsque la pince 59 est en position ouverte comme illustré sur la figure 6, au poste d'accrochage illustré en particulier sur la figure 3, on déplace le jarret, comme on l'a déjà indiqué, jusqu'à ce que son extrémité vienne en contact avec le palpeur 110. Le détecteur de présence provoque alors la commande du vérin pneumatique 94 qui exerce une traction sur la tige 101. Il y a lieu de noter que dans cette phase, le vérin de blocage 111 est dans la position illustrée sur la figure 7 de sorte que le disque de blocage 119 peut passer entre les tiges 118 écartées de la fourchette 113. Dès que les mâchoires de la pince 59 se sont refermées sur le jarret, on actionne le vérin de blocage 111 de façon à le déplacer jusque dans la position illustrée sur la figure 8 qui correspond à la position de sécurité. On notera que la fermeture des mâchoires de la pince 59 a été obtenue par une simple traction sur la tige 101, les branches 98 et 99 prenant appui sur le bord annulaire tronconique 97 de la cloche 96. Ce mouvement s'est fait à l'encontre de la force de rappel des deux vérins élastiques 102 et 103.

Pour procéder à l'ouverture des mâchoires de la pince 59 au dernier poste de traitement de l'installation, on libère tout d'abord le dispositif de sécurité en faisant revenir le vérin de blocage 111 dans la position illustrée sur la figure 7. On agit ensuite sur le vérin 94 de façon à exercer une action de poussée sur la tige 101. Les branches 98 et 99 de la pince 59 s'ouvrent alors grâce à la traction exercée par les deux vérins de rappel 102 et 103 combinée au mouvement de descente de l'axe de pivotement 100. La commande automatique de ces mouvements devant le dernier poste de l'installation est faite par des palpeurs et détecteurs montés sur les potences coopérant avec les cames fixes ou par d'autres moyens analogues de type classique non représentés sur les figures.

La figure 9 illustre en détail la structure de l'une des pinces de vertèbres 67 fixée à la barre 66 de chaque potence 6. Un élément de support 124 est fixé rigidement par exemple par soudure perpendiculairement à la barre 66 et porte un flasque 125 sur lequel est fixé le bâti 126 d'un vérin pneumatique 127. La tige 128 du vérin 127 est reliée à son extrémité libre à l'axe de pivotement 129 des deux branches 130 et 131 de la pince 67. De manière analogue à la pince de jarret 59 illustrée sur la figure 6, les pinces de vertèbres 67 comportent une cloche tronconique 132 dont le bord externe ouvert est muni d'un anneau de friction 133 de surface tronconique qui entre en contact avec le bord externe des branches 130 et 131. La cloche 132 est fixée au bâti 126 et présente des orifices latéraux 134 et 135 permettant le passage de doigts de retenue 136 et 137 solidaires des branches 130 et 131 de la pince 67. Les extrémité libres des branches 130 et 131 comportent des mâchoires de serrage 138, 139 munies de picots améliorant la pénétration dans la chair du quartier. On voit également sur la figure 9 l'extrémité active du palpeur 80 dont le mouvement commande la fermeture de la pince 67 par l'intermédiaire du vérin pneumatique 127.

La pince 67 fonctionne de manière analogue à la pince de jarret 59 illustrée sur la figure 6. En effet la fermeture de la pince 67 est provoquée par une traction sur la tige 128, les branches 130 et 131 prenant appui sur le rebord tronconique 133 de la cloche 132. Pour provoquer l'ouverture de la pince 67, il suffit d'exercer une action de poussée sur la tige 128, les branches 130 et 131 prenant alors appui, par l'intermédiaire des doigts 136 et 137, sur les orifices 134 et 135 de la cloche 132. La fermeture des mâchoires 67 se fait automatiquement par poussée du quartier de viande en direction de la mâchoire 67, la portion des vertèbres dorsales venant en contact avec le palpeur 80.

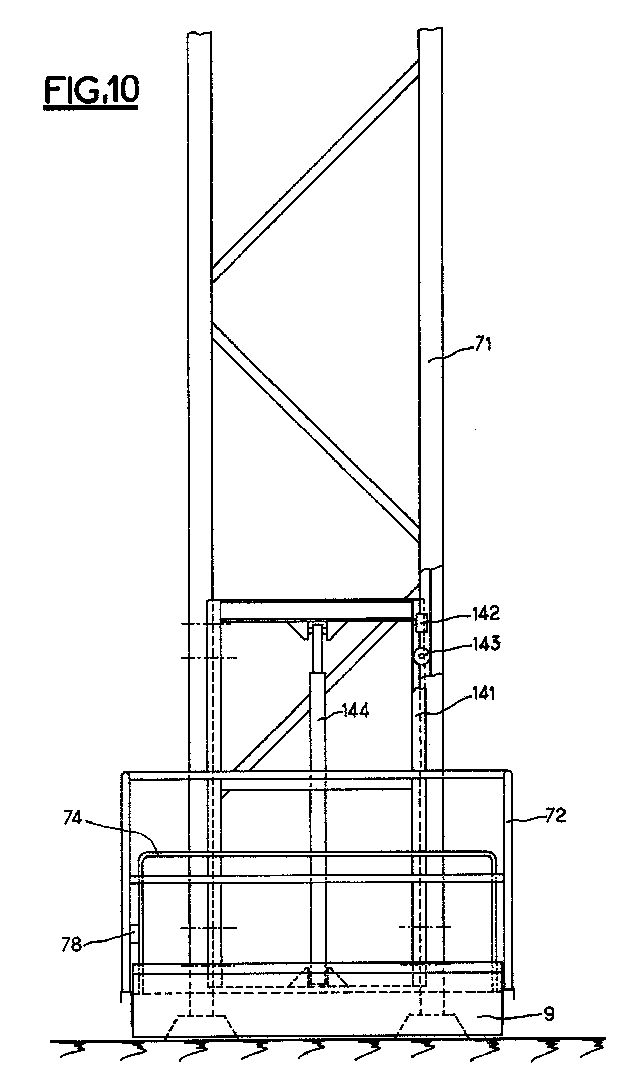

La figure 10 montre certains détails de l'une des plate-formes 9 de l'installation. Sur cette vue en élévation, on voit que la plate-forme 9 est solidaire d'un châssis mobile 141 pouvant se déplacer par l'intermédiaire de galets 142 et 143 le long du châssis vertical fixe 71 sous l'action d'un vérin vertical 144 à action pneumatique ou hydraulique. On notera que les axes des galets 142 et 143 sont orthogonaux ce qui améliore le guidage du châssis mobile 141 à l'intérieur des fer en U qui constituent le châssis fixe 71.

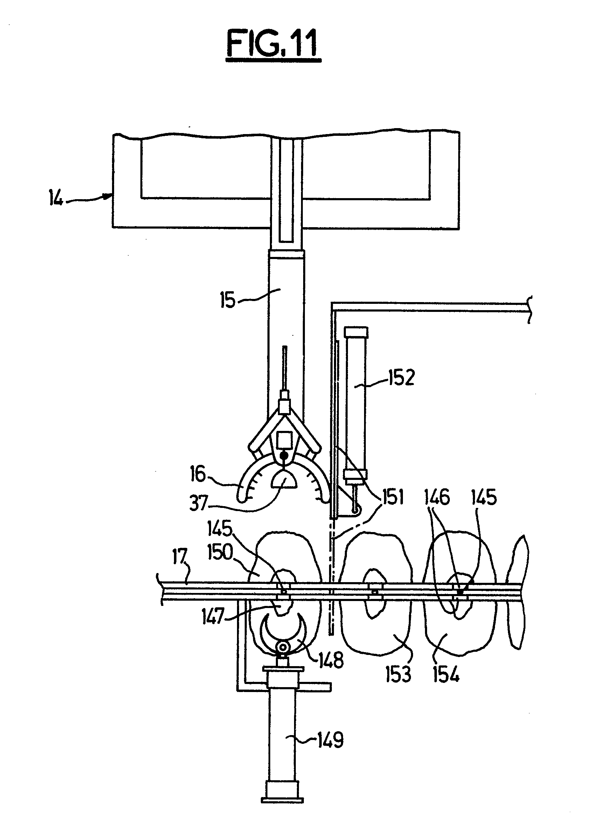

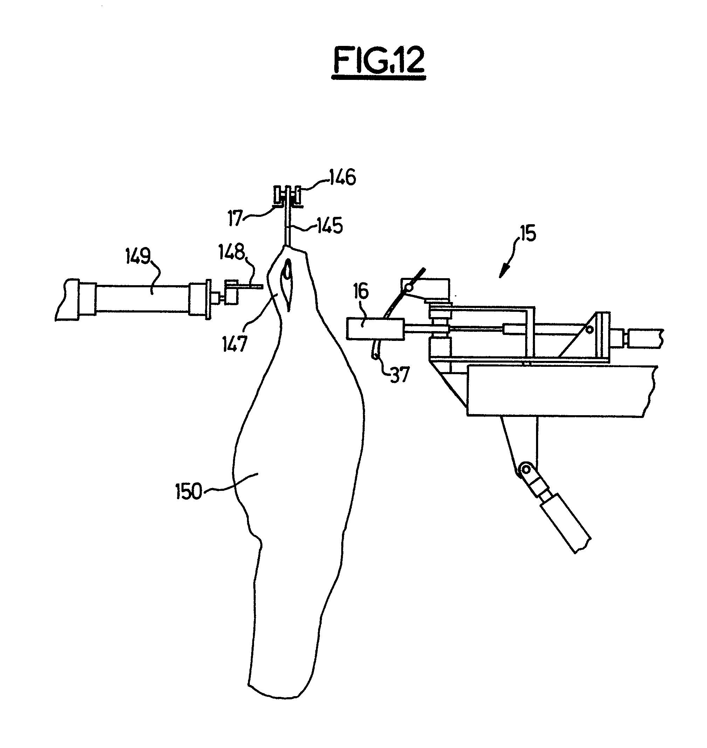

Les figures 11 et 12 illustrent le détail de la découpe du tendon qui se fait immédiatement après la saisie du jarret par le dispositif de transfert et de chargement 14. Sur ces figures, où les pièces identiques portent les mêmes références, on retrouve le bras télescopique 15 à l'extrémité duquel est montée la pince de préhension 16. Les quartiers arrière suspendus par des crochets arrivent par le rail 17 sur lequel se déplacent les crochets 145 par les roulettes 146. Chaque crochet 145 passe dans l'orifice laissé libre par le tendon 147 comme on peut le voir sur la figure 12. Plusieurs quartiers arrière se trouvent en attente sur le rail 17 à la partie droite de la figure 11. Le poste préalable de sectionnement du tendon comprend une cisaille 148 actionnée automatiquement par des moyens non représentés associés à un vérin pneumatique 149 monté de façon que la cisaille 148 se trouve dans un plan horizontal à la hauteur du tendon 147 lorsque le quartier correspondant 150 se trouve dans la position où il peut être saisi par le dispositif de transfert et de chargement 14.

Un panneau de protection coulissant 151 commandé par un vérin pneumatique 152 permet en outre de séparer le quartier 150 des autres quartiers en attente 153 et 154 (figure 11) tout en garantissant la sécurité du système vis-à-vis des opérateurs.

Ce poste fonctionne de la manière suivante : le bras télescopique 15 est tout d'abord actionné jusqu'à ce que le jarret du quartier 150 vienne en contact avec le palpeur 37 ce qui entraîne la fermeture des mâchoires 16 qui viennent enserrer le quartier 150 dans la zone du jarret c'est-à-dire dans un plan horizontal situé au-dessous de celui de la cisaille 148 qui elle se trouve au niveau du tendon 147. Après que cette saisie par la pince de préhension 16 ait été effectuée, le vérin 149 est actionné ce qui commande le déplacement de la cisaille 148 vers le tendon 147; puis la fermeture de ladite cisaille est commandée, entraînant le sectionnement du tendon. Après retour en position de repos de la cisaille 148, le bras télescopique 15 est soulevé puis revient en arrière ce qui dégage le quartier 150 du crochet 145 grâce au sectionnement du tendon 147. Le quartier 150 ainsi soutenu par le dispositif de transfert et de chargement 14 peut alors être déplacé somme il a été expliqué précédemment, jusqu'au poste d'accrochage.

## Revendications

1. Procédé de traitement semi-automatique de quartiers de viande de bovins ou autres quadrupèdes se présentant initialement suspendus verticalement caractérisé par le fait qu'il comprend les étapes suivantes :
- on déplace le quartier (61) depuis sa position initiale jusqu'à un poste d'accrochage (4) faisant partie d'une boucle fermée munie d'un rail aérien (1) et d'une pluralité de moyens d'accrochage de quartier (6) en déplacement continu le long dudit rail;
- après accrochage du quartier sur un moyen d'accrochage (59), on déplace le quartier suspendu vericalement à hauteur constante devant une pluralité de postes de traitement (8) diposés à intervalles le long d'un trajet en boucle fermée;
- on procède au prélèvement des muscles du quartier successivement à chaque poste (8) en permettant un déplacement vertical dans les deux sens commandé par chaque opérateur à chaque poste de façon à lui permettre de se placer dans la position la plus adaptée à son travail;
- et on libère au dernier poste les os subsistants sur le moyen d'accrochage après le prélèvement de l'ensemble des muscles de chaque quartier de façon à permettre audit moyen d'accrochage de saisir un nouveau quartier.

2. Procédé selon la revendication 1, caractérisé par le fait qu'on autorise une rotation du quartier sur lui-même à au moins certains postes de traitement et on maintient au contraire le quartier contre toute rotation aux autres postes en le saisissant par les vertèbres.

3. Procédé selon les revendication 1 ou 2, caractérisé par le fait qu'on modifie l'inclinaison du quartier par rapport à la verticale devant certains postes.

4. Procédé selon l'une quelconque des revendications précédentes adapté au traitement de quartiers arrières caractérisé par le fait qu'après avoir prélevé une partie des muscles et assuré le maintien du quartier contre toute rotation, on sépare la cuisse de ladite partie basse de façon à permettre une rotation de la cuisse suspendue verticalement pour le prélèvement des muscles restants, la partie basse du quartier poursuivant son déplacement en même temps que la cuisse le long du trajet en boucle fermée précitée.

5. Installation de traitement semi-automatique de quartiers de viande de bovins ou autres quadrupèdes pour la mise en oeuvre du procédé selon l'une quelconque des revendications précédentes, caractérisée par le fait qu'elle comprend : un agencement de rail aérien (1) de niveau constant formant une boucle fermée; une pluralité de potences d'accrochage (6) suspendues à intervalles réguliers le long du rail aérien (1); des moyens (7) d'entraînement en continu de l'ensemble des potences le long de ladite boucle fermée du rail aérien (1); une pluralité de postes de traitement fixes (8) disposés le long d'au moins une portion de la boucle fermée et à l'extérieur de celle-ci, chaque poste (8) comprenant une plate-forme (9) équipée de moyens de déplacement vertical automatique à commande manuelle; un agencement d'évacuation, par exemple sous forme de tapis transporteur disposé sous le trajet des potences (6) pour recevoir les muscles prélevés aux différents postes de traitement (8); et un dispositif de transfert et de chargement automatique (14) muni d'un organe de préhension capable de déplacer un quartier (61) initialement suspendu jusqu'à une potence d'accrochage se trouvant dans une zone (4) de la boucle fermée constituant un poste d'accrochage.

6. Installation selon la revendication 5, caractérisée par le fait que l'organe de préhension du dispositif de transfert et de chargement est capable d'effectuer un mouvement télescopique suivi d'un mouvement de rotation.

7. Installation selon les revendications 5 ou 6, caractérisée par le fait qu'elle comprend en outre une centrale d'alimentation en énergie disposée à l'intérieur de la boucle fermée, munie d'un collecteur central fixe (19) coopérant avec un plateau rotatif (20) entraîné en synchronisme avec les potences d'accrochage (6), ledit plateau (20) supportant au moins un moyen distributeur de conduites d'alimentation en énergie reliées au moins à un groupe de potences (6).

8. Installation selon la revendication 5, caractérisée par le fait que le boucle fermée est de forme générale allongée et que le plateau (20) supporte plusieurs enrouleurs (21, 25) à rappel élastique, chacun recevant une conduite d'alimentation reliée à un groupe de potences (6).

9. Installation selon les revendications 7 ou 8, caractérisée par le fait qu'elle est alimentée en énergie électrique et pneumatique, les câbles électriques étant enroulés sur des enrouleurs différents des conduites d'air comprimé.

10. Installation selon l'une quelconque des revendications 5 à 9 caractérisée par le fait que chaque potence d'accrochage (6) comprend :
- un dispositif de suspension oscillant comportant des galets (83, 84) coopérant avec le rail aérien (1) et des moyens d'accrochage du quartier comprenant une pince verticale (59) à commande pneumatique automatique montée à rotation sur un axe vertical (93);
- une barre (64) sensiblement verticale fixée dans sa partie haute au dispositif de suspension;
- au moins une pince horizontale (67) à commande automatique et pneumatique montée sur la barre précitée et adaptée pour venir serrer une partie du squelette du quartier à au moins certains postes de traitement.

11. Installation selon la revendication 10 caractérisée par le fait que chaque potence comprend en outre un boîtier de distribution d'énergie (81) monté sur la barre précitée et relié par au moins une conduite d'alimentation à la centrale d'alimentation en énergie se trouvant à l'intérieur de la boucle fermée.

12. Installation selon les revendications 10 ou 11, caractérisée par le fait que le dispositif de suspension (89) est fixé sur les galets (83, 84) par l'intermédiaire de rondelles hémisphériques (88) autorisant une oscillation de faible amplitude dans un plan perpendiculaire au déplacement de la potence (6).

13. Installation selon l'une quelconque des revendications 10 à 12, caractérisée par le fait que chaque pince horizontale (67) est montée à rotation sur la barre verticale (64) et coopère avec un dispositif d'escamotage en vue d'une rotation limitée.

14. Installation selon l'une quelconque des revendications 10 à 13, caractérisée par le fait que les pinces (59, 67) comprennent deux branches pivotantes (98, 99, 130, 131) montées sur un axe solidaire de l'extrémité de la tige d'un vérin pneumatique (94, 127) et un moyen de butée (97, 133) coopérant avec les branches précitées pour provoquer leur fermeture automatique lors d'un mouvement de traction de la tige du vérin.

15. Installation selon la revendication 14, caractérisée par le fait que les pinces (59, 67) comprennent des moyens de retenue des branches précitées (102, 103, 136, 137) pour provoquer l'ouverture automatique desdites branches lors d'une action de poussée sur la tige du vérin.

16. Installation selon l'une quelconque des revendications 14 ou 15, caractérisée par le fait qu'un détecteur de présence par contact (110, 140) est monté entre les branches des pinces (59, 67) et commande l'action du vérin (94, 127) lors de la pénétration d'une portion du quartier entre les branches des pinces.

17. Installation selon l'une quelconque des revendications 10 à 16, caractérisée par le fait que la pince verticale (59) comporte un dispositif de blocage de sécurité en position fermée comprenant une fourchette transversale (113) actionnée par un vérin de blocage (111) venant immobiliser la tige (101) du vérin d'actionnement (94) de la pince.

18. Installation selon l'une quelconque des revendications 5 à 17, caractérisée par le fait qu'elle comprend une pluralité de capteurs de position coopérant avec des cames fixes disposées le long du trajet des potences (6) afin de commander automatiquement une partie des mouvements d'ouverture et de fermeture des pinces.

19. Installation selon l'une quelconque des revendications 5 à 18, caractérisée par le fait qu'elle comporte un rail inférieur (27) disposé à l'intérieur de la boucle formée par la rail aérien (1) précité et formant une boucle de forme générale analogue, ledit rail inférieur (27) coopérant avec les extrémités inférieures des barres (66) des potences (6).

20. Installation selon la revendication 19, caractérisée par le fait que le rail inférieur (27) présente des décrochements dans son trajet afin de faire varier automatiquement l'inclinaison des barres à certains postes de traitement.

21. Installation selon l'une quelconque des revendications 5 à 20, caractérisée par le fait que chaque plate-forme (9) est montée en vue de son déplacement vertical sur un châssis vertical fixe (71) par l'intermédiaire de galets (142, 143), le déplacement étant réalisé par un vérin (144) commandé par une barre transversale pivotante (74) disposée de façon à pouvoir être actionnée par la jambe de l'opérateur.

22. Installation selon l'une quelconque des revendications 5 à 21, caractérisée par le fait que les potences d'accrochage (6) sont fixées sur une chaîne (7) se déplaçant en continu le long du rail aérien (1).

23. Installation selon l'une quelconque des revendications 6 à 22, caractérisée par le fait que le dispositif de transfert et de chargement comprend un bras télescopique (15) monté sur une couronne dentée pouvant être entraînée en rotation (39) et pouvant être déplacée verticalement sous l'action d'un vérin hydraulique (44).

24. Installation selon la revendication 23, caractérisée par le fait que le bras télescopique (15) est monté pivotant (29) sur la couronne (39), un vérin hydraulique (49) commandant son inclinaison par rapport à l'horizontale.

25. Installation selon les revendications 23 ou 24, caractérisée par le fait qu'une pince d'accrochage transversale (36) est montée à l'extrémité du bras télescopique (15).

26. Installation selon l'une quelconque des revendications 23 à 25, caractérisée par le fait que le bras de transfert télescopique est commandé de façon à subir les mouvements suivants :

- déplacement télescopique horizontal;
- mouvement continu de rotation et d'élévation;
- pivotement vers le haut afin d'introduire l'extrémité du quartier dans une pince verticale d'une potence (6).

27. Installation selon l'une quelconque des revendications 5 à 26 adaptée plus particulièrement qu traitement de quartiers arrière, caractérisée par le fait que la pince verticale est adaptée au serrage du jarret et est maintenue serrée pendant toutes les opérations de prélèvement des muscles, depuis l'accrochage du quartier jusqu'à la libération du squelette subsistant au dernier poste.

28. Installation selon la revendication 27, caractérisée par le fait que la ou les pinces horizontales sont adaptées pour serrer la zone des vertèbres après qu'une partie des muscles ait été prélevée.

29. Installation selon les revendication 27 ou 28, caractérisée par le fait qu'elle comprend un poste préalable de sectionnement du tendon comportant une cisaille à commande automatique commandée après que l'organe de préhension ait saisi le jarret, permettant ainsi la libération du crochet par lequel le quartier arrière était initialement suspendu.

30. Installation selon l'une quelconque des revendications 27 à 29, caractérisée par le fait qu'elle comprend un panneau de protection coulissant capable de séparer le quartier devant être saisi par l'organe de préhension des quartiers suivants en attente, au moment de l'opération de préhension.

# FIG.1

# FIG.2

FIG.3

FIG.4

FIG.5

FIG.6

## FIG.7

## FIG.8

# FIG.9

FIG.10

0233795

FIG.11

0233795

# FIG.12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 121 477  (CHIRON) <br><br> --- | | A 22 B    7/00 |
| A | DE-A-3 204 448  (TESCHKE) <br><br> --- | | |
| A | US-A-2 883 700  (LIEBMANN) <br><br> --- | | |
| A | US-A-4 179 021  (WALLACE) <br><br> --- | | |
| A | US-A-4 090 275  (JORGENSEN) <br><br> --- | | |
| A | US-A-3 317 949  (GARCIA) <br><br> --- | | DOMAINES TECHNIQUES RECHERCHES (Int. Cl.4) |
| A | EP-A-0 049 689  (VENTURELLI) <br><br> --- | | A 22 B <br> A 22 C |
| A | EP-A-0 074 029  (GERLACH) <br><br> --- | | |
| A | CA-A-1 019 112  (HOVESEN) <br><br> ----- | | |

Le présent rapport de recherche a été établi pour toutes les revendications

| Lieu de la recherche | Date d'achèvement de la recherche | Examinateur |
|---|---|---|
| LA HAYE | 03-04-1987 | DE LAMEILLIEURE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82